# FASCICULE DE BREVET EUROPEEN

(11) **EP 3 194 954 B1**
(45) Date de publication et mention de la délivrance du brevet: **27.03.2019**
(21) Numéro de dépôt: 15763946.9
(22) Date de dépôt: 18.09.2015
(51) Int. Cl.: G01N 29/04, G01M 7/08, G01N 29/14

(54) **DISPOSITIF DE CARACTERISATION D'UN OBJET EN DEPLACEMENT**
VORRICHTUNG ZUR CHARAKTERISIERUNG EINES SICH BEWEGENDEN OBJEKTS
DEVICE FOR CHARACTERISING A MOVING OBJECT

(30) Priorité: 19.09.2014 FR 1458847
(43) Date de publication de la demande: 26.07.2017
(73) Titulaire: Commissariat à l'Énergie Atomique et aux Énergies Alternatives, 75015 Paris (FR); TERRADONA, 13790 Rousset (FR)
(72) Inventeur: PELISSON, Roland, F-38660 La Terrasse (FR)
(74) Mandataire: Novaimo
(86) Numéro de dépôt international: PCT/EP2015/071494
(87) Numéro de publication internationale: WO 2016/042149

(56) Documents cités:
- EP-A1- 0 372 690
- FR-A1- 2 635 993
- GB-A- 2 377 019
- JP-A- S6 173 063
- JP-A- 2001 041 941
- US-A- 3 877 295
- US-A- 6 026 686
- US-A1- 2002 139 729

## Description

### Domaine technique de l'invention

L'invention concerne le domaine du traitement d'objets, et plus particulièrement de déchets.

L'invention a pour objet plus particulièrement dispositif de caractérisation d'un objet au cours du déplacement dudit objet, notamment pendant sa chute.

### État de la technique

Notre mode de consommation entraîne la génération de plus en plus de déchets. Il est devenu crucial d'organiser des systèmes de collecte permettant de récupérer ces déchets en vue de les valoriser, et permettant préférentiellement d'inciter au recyclage.

La valorisation, ou recyclage, nécessite l'identification des déchets.

Il existe des techniques de tri de déchets solides qui utilisent l'optique en vue de reconnaitre un objet examiné par traitement d'images.

En ce sens, le document FR2905880 décrit un dispositif de tri d'objets comprenant un poste de reconnaissance visuelle d'un objet par moyen vidéo, un poste d'identification de la composition de l'objet utilisant un spectromètre, un poste de différenciation des métaux constituant l'objet utilisant un capteur inductif, et un poste de mesure du poids de l'objet. L'utilisation de nombreux capteurs nécessaires aux différents postes induit un coût prohibitif du dispositif de tri et une consommation énergétique élevée.

En outre, l'utilisation de l'optique présente certains inconvénients :
- la nécessité d'utiliser des systèmes d'éclairage idoines,
- la complexité des algorithmes de reconnaissance de forme,
- le coût,
- et l'entretien dû au nettoyage fréquent en vue de désencrasser l'optique et les systèmes d'éclairage.

En ce sens, il résulte un besoin de développer de nouvelles techniques permettant de caractériser un objet, et ne présentant pas tout ou partie des inconvénients listés ci-dessus.

Il est aussi connu par le document US-A-6026686 un dispositif tel que divulgué dans le préambule de la revendication 1.

### Objet de l'invention

Le but de la présente invention est de proposer une solution qui remédie à tout ou partie des inconvénients listés ci-dessus.

On tend vers ce but grâce à un dispositif de caractérisation d'un objet en déplacement, comprenant :
- un module de caractérisation dudit objet,
- un élément de guidage de l'objet configuré de sorte à contraindre au moins une partie du déplacement de l'objet,
- un élément de percussion disposé de sorte à générer un choc sur l'objet au cours de son déplacement après que ledit objet ait coopéré avec au moins une partie de l'élément de guidage, cet élément de percussion étant configuré de telle sorte à être mis en mouvement et de telle sorte qu'il résulte de cette mise en mouvement que l'élément de percussion vient frapper l'objet en déplacement,
- un système acoustique configuré de sorte à enregistrer un signal sonore représentatif dudit choc entre l'élément de percussion et l'objet, ledit système acoustique étant relié audit module de caractérisation afin que le signal sonore enregistré participe à la caractérisation dudit object,
- ledit dispositif comprenant également un élément intermédiaire agencé avec l'élément de percussion, le mouvement de l'élément de percussion étant initié par l'objet lors de son déplacement venant transmettre un effort à l'élément intermédiaire de telle manière que ledit effort appliqué à l'élément intermédiaire provoque la mise en mouvement de l'élément de percussion.

Selon un mode de réalisation préférentiel, ledit déplacement correspond à une chute dudit objet.

Selon une réalisation, l'élément de percussion est disposé de telle sorte que ledit choc soit réalisé latéralement sur l'objet vis-à-vis de son déplacement.

Par exemple, l'élément de percussion est disposé le long de l'élément de guidage ou à une extrémité de l'élément de guidage.

Selon une réalisation avantageuse, l'élément de percussion est mobile relativement à l'élément de guidage pour venir percuter un objet au niveau de l'élément de guidage.

Selon une mise en oeuvre, le dispositif de caractérisation comporte un capteur à ultrason orienté de sorte à couvrir le passage de l'objet au cours de son déplacement, ledit capteur à ultrason étant relié au module de caractérisation pour déterminer au moins une dimension dudit objet.

L'élément de guidage peut adopter la forme d'un tube ou d'une gouttière ou de tubes parallèles.

Selon un perfectionnement, le dispositif de caractérisation comporte un organe flexible (sur lequel est monté l'élément de percussion.

Par exemple, ledit organe flexible et l'élément de percussion sont agencés de telle sorte qu'au cours du déplacement de l'objet, ledit objet vient en contact avec l'organe flexible qui s'écarte de manière à générer un effet ressort propulsant l'élément de percussion pour provoquer ledit choc entre l'élément de percussion et un flanc de l'objet. Notamment, l'élément de guidage comporte une première extrémité longitudinale proximale d'un orifice permettant l'insertion dudit objet et la réception dudit objet par l'élément de guidage, et une deuxième extrémité longitudinale distale dudit orifice, l'organe flexible étant monté à ladite deuxième extrémité longitudinale.

Le module de caractérisation peut être configuré de sorte à exploiter les fréquences dominantes dudit signal sonore et/ou le spectre du signal sonore et/ou l'énergie par bandes du signal sonore.

Notamment, l'élément de percussion ne présente pas de vibration propre ou est choisi de sorte à vibrer sur une fréquence donnée spécifique.

Selon une réalisation, le dispositif de caractérisation comporte un capteur magnétique disposé au niveau d'une zone de passage de l'objet au cours de son déplacement, ledit capteur magnétique étant relié au module de caractérisation.

En particulier, l'élément de guidage peut comprendre un palpeur configuré de sorte à interagir avec l'objet au cours du déplacement et un capteur d'inclinaison du palpeur relié au module de caractérisation de sorte à déterminer une taille de l'objet.

L'invention est aussi relative à un dispositif de récupération d'objets comprenant un contenant dans lequel lesdits objets sont destinés à être insérés et un dispositif de caractérisation d'objet tel que décrit disposé de telle sorte à caractériser ledit objet au cours de son insertion dans ledit contenant.

Selon une réalisation un premier capteur à ultrason, notamment situé au-dessus d'une sortie du système de guidage, est orienté vers le fond du contenant, ledit premier capteur à ultrason permettant d'une part d'estimer une taille de l'objet au cours de son passage dans une zone de détection du premier capteur à ultrason et, d'autre part, ledit premier capteur à ultrason est relié à un module d'estimation du remplissage du contenant exploitant des mesures issues dudit premier capteur à ultrason pour déterminer un niveau de remplissage dudit contenant lorsqu'aucun objet n'est présent dans ladite zone de détection.

Un deuxième capteur à ultrason peut être relié à un module antifraude du dispositif de récupération, ledit module antifraude exploitant des informations en provenance dudit deuxième capteur à ultrason pour détecter une remontée de l'objet inséré dans le contenant.

L'invention est aussi relative à un procédé de caractérisation d'objets à l'aide d'un dispositif de caractérisation tel que décrit, comportant une étape d'étude du signal sonore par le système acoustique.

Notamment, l'étape d'étude du signal sonore comporte une étape d'extraction des fréquences dominantes dudit signal sonore et/ou du spectre sonore dudit signal sonore et/ou de l'énergie par bande dudit signal sonore, et une étape de discrimination du matériau constituant l'objet à partir de données issus de l'étape d'extraction.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en perspective d'un dispositif de caractérisation associé à un dispositif de récupération selon un mode de réalisation de l'invention,
- la figure 2 illustre une vibration sonore associée à un choc d'une bille sur une bouteille de 75cl en verre,
- la figure 3 illustre une vibration sonore associée à un choc d'un rouleau d'adhésif sur une bouteille,
- la figure 4 illustre une vibration sonore associée à un choc d'une bille sur une bouteille de 25cl en verre,
- la figure 5 illustre une vibration sonore associée à un choc d'une bille sur une bouteille en plastique,
- la figure 6 illustre une vibration sonore associée à un choc d'une bille sur une pierre,
- la figure 7 illustre une vibration sonore associée à un choc d'une bille sur un morceau de carrelage,
- la figure 8 illustre les spectres moyens d'un enregistrement sonore en cas d'un choc d'une bille sur du verre,
- la figure 9 illustre les spectres moyens d'un enregistrement sonore en cas d'un choc d'une bille sur du métal,
- la figure 10 illustre les spectres moyens d'un enregistrement sonore en cas d'un choc d'une bille sur du carrelage,
- la figure 11 illustre les spectres moyens d'un enregistrement sonore en cas d'un choc d'une bille sur de la pierre,
- les figures 12 et 13 illustrent les vecteurs d'énergie moyens calculés pour différents types de matériaux,
- la figure 14 illustre un mode particulier de réalisation d'un dispositif de caractérisation associé à un dispositif de récupération,
- la figure 15 illustre un autre mode particulier de réalisation d'un dispositif de caractérisation associé à un dispositif de récupération,
- la figure 16 illustre un mode d'exécution particulier d'un dispositif de caractérisation associé à un dispositif de récupération.

### Description de modes préférentiels de l'invention

Le dispositif décrit ci-après diffère de l'art antérieur en ce qu'il propose de générer volontairement un choc sur un objet au cours de son déplacement en vue de caractériser l'objet.

De manière particulière, le dispositif de caractérisation d'un objet est destiné à faire partie d'un dispositif de récupération d'objets comprenant un contenant dans lequel lesdits objets sont destinés à être insérés. Le dispositif de caractérisation étant alors disposé de telle sorte à caractériser l'objet au cours de sa chute dans le contenant ou plus généralement au cours de son insertion dans le contenant.

Autrement dit, dans le cadre du dispositif de récupération d'objets, la chute/insertion d'un objet sera assimilée à sa chute/insertion dans le contenant, on parlera alors de chute/insertion de l'objet inséré.

Ainsi, la notion de chute/insertion peut être généralisée dans la présente description à un déplacement de l'objet qui, dans un cas particulier, correspond à une chute dudit objet.

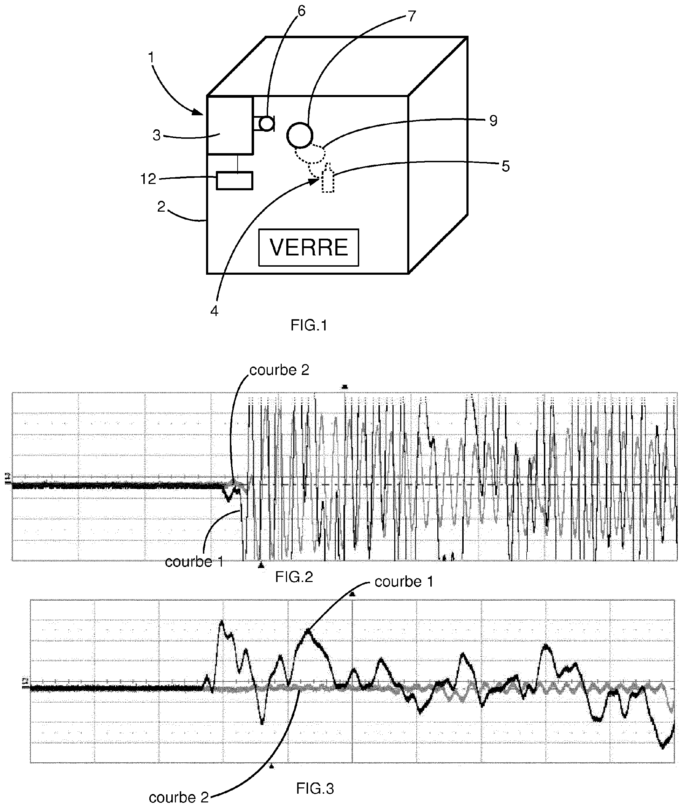

Comme l'illustre la figure 1, un dispositif de caractérisation 1 d'un objet 5 au cours d'un déplacement dudit objet 5 comporte un module de caractérisation 3 dudit objet 5, par exemple lorsqu'il est inséré dans le contenant 2. On comprend alors qu'à chaque insertion d'un objet 5 dans le contenant 2, ce dernier pourra être caractérisé par le dispositif de caractérisation.

La figure 1 montre plus généralement le dispositif de récupération d'objets comprenant le contenant 2 dans lequel lesdits objets sont destinés à être insérés.

Le dispositif de caractérisation 1 comporte un élément de guidage 9 de l'objet 5 configuré de sorte à contraindre au moins une partie de ladite chute/insertion de l'objet 5.

Par ailleurs, le dispositif de caractérisation 1 comporte un élément de percussion 4 disposé de sorte à générer un choc sur l'objet 5 au cours de son déplacement après que ledit objet ait coopéré avec au moins une partie de l'élément de guidage 9 (c'est-à-dire qu'il se soit déplacé de manière contrainte par l'élément de guidage 9). Sur la figure 1, l'élément de percussion 4 vient en contact avec l'objet 5 de type bouteille lorsque ledit objet 5 est inséré dans le contenant 2. On comprend alors que, dans le cadre du dispositif de récupération, le choc est préférentiellement généré à l'intérieur du contenant 2, notamment lorsque l'objet 5 est complètement dans le contenant 2.

Ainsi, on comprend que l'élément de guidage 9 permet notamment de s'assurer que l'objet 5 puisse bien être « frappé » par l'élément de percussion 4 grâce au guidage de l'objet 5 dans une zone où il pourra coopérer avec l'élément de percussion 4.

Autrement dit, on comprend de ce qui a été dit ci-dessus et de la définition d'un élément de percussion 4 que c'est ce dernier qui génère le choc avec l'objet 5, c'est-à-dire que l'élément de percussion 4 peut subir un mouvement d'où il résulte, qu'à un moment de ce mouvement, l'élément de percussion 4 frappe l'objet 5. Selon un mode de réalisation, l'élément de percussion 4 est donc monté mobile relativement à l'élément de guidage 9. Il peut occuper une première position au repos en l'absence d'objet 5, et une seconde position au niveau de l'élément de guidage 9 lors de la présence d'un objet 5. Le mouvement de la première position vers la seconde lui permet de venir percuter l'objet 5, lors de son déplacement au niveau de l'élément de guidage.

L'élément de percussion 4 peut être disposé le long de l'élément de guidage 9 ou à une extrémité de l'élément de guidage 9 de sorte à coopérer avec l'objet lorsque tout ou partie de cet objet est encore en contact avec l'élément de guidage 9. Préférentiellement, l'élément de percussion 4 est agencé de telle sorte à frapper l'objet sur une partie de ce dernier qui ne coopère plus avec l'élément de guidage 9 pour favoriser la propagation de l'onde de choc au sein de l'objet et ainsi enregistrer un signal sonore de meilleure qualité.

En vue de participer à la caractérisation de l'objet 5, le dispositif de caractérisation 1 comporte un système acoustique 6 configuré de sorte à enregistrer un signal sonore représentatif dudit choc entre l'élément de percussion 4 et l'objet 5. Ce système acoustique 6 est relié audit module de caractérisation 3 afin que le signal sonore enregistré participe à la caractérisation dudit objet 5. Autrement dit, le module de caractérisation 3 peut comporter les moyens nécessaires pour exploiter le signal sonore enregistré en vue de caractériser l'objet 5.

Le contenant 2 peut comporter un orifice 7. Cet orifice 7 permet l'introduction d'objets 5 dans le contenant 2 avant qu'ils ne coopèrent avec l'élément de guidage 9. Autrement dit, l'élément de guidage peut être disposé à l'intérieur du contenant 2 de sorte à réceptionner ledit objet après son passage par l'orifice 7 du contenant 2.

Les objets récupérés dans ledit dispositif de récupération sont notamment des déchets. Parmi ces dispositifs, il est connu d'utiliser des contenants aériens ou enterrés. Dans le cas de contenants enterrés, le dispositif de caractérisation proposé ici pourra être inséré au niveau du périscope.

Avantageusement, les objets à caractériser par le dispositif de caractérisation sont en verre. Toutefois le dispositif peut être à même de différentier des bouteilles en plastique, des canettes en aluminium ou des conserves en fer.

Ainsi, on comprend que de manière préférentielle le contenant 2 du dispositif de récupération est destiné à stocker un type particulier d'objets par exemple se présentant sous forme d'objets creux tels que des bouteilles de verre ou de plastique ou encore canettes en aluminium ou boites de conserve en fer.

En fait, le module de caractérisation 3 permet avantageusement de discriminer le matériau formant l'objet 5 que l'on cherche à caractériser par étude du signal sonore enregistré correspondant. En ce sens, il est possible de savoir, grâce au module de caractérisation 3, si l'objet 5 est d'un matériau compatible avec le contenant 2.

Un choc sur du verre, notamment creux, est un son d'autant plus aigu que le choc est bref (par exemple si l'élément de percussion 4 rebondit à l'impact). La discrimination du verre face à une fraude avec du bois, de la pierre ou des bouteilles plastiques est ainsi réalisable. Elle reste néanmoins plus difficile face à des plaques de carrelage, certaines canettes métalliques ou des boites de conserves non revêtues d'étiquette papier externe ou d'une couche protectrice épaisse interne. On a alors un son aigu proche de celui du verre (notamment des petites bouteilles).

L'utilisation avantageuse d'un signal sonore permet de caractériser l'objet inséré à moindre coûts en regard de ce qui est fait dans l'art antérieur.

Pour valider ce fonctionnement, une étude a été réalisée sur des bouteilles en verre.

Dans un premier temps, il a été déterminé que le type d'élément de percussion 4 pouvait influer sur la qualité de la caractérisation de l'objet 5. En ce sens, il a été utilisé deux types d'élément de percussion 4 : ruban adhésif (pour simuler un choc mou et lourd), bille en acier de 4,7 mm de diamètre (pour simuler un impact léger suivi d'un rebond de l'impactant).

La figure 2 illustre la signature vibratoire d'un choc de la bille en acier sur une bouteille de 75cl en verre, et la figure 3 la signature vibratoire d'un choc du ruban adhésif sur la même bouteille. Le dispositif utilisé dans le cadre de l'expérimentation pour obtenir le résultat des figures 2 à 7 consiste à coller à même la bouteille un disque piézoélectrique pour mesurer au plus près du verre la signature vibratoire générée. Sur les figures 2 et 3, la courbe 1 représente la réponse haute fréquence du signal vibratoire visualisée sur un oscilloscope via un piézoélectrique de type 40 kHz et la courbe 2 représente le même signal vibratoire mais à un autre endroit du flanc de la bouteille et avec un piézoélectrique de type 3 kHz.

On déduit des figures 2 et 3 que la signature vibratoire est très différente en fonction du type de l'élément de percussion 4 (ceci étant notamment dû aux pertes des fréquences hautes lors du choc mou). En outre, on voit clairement que la discrimination du verre avec un impactant lourd et mou serait plus difficile du fait de la perte d'information haute fréquence. Sur les figures 2 et 3, une division horizontale correspond à 100µs et une division verticale à 2V (tension mesurée directement sur piézoélectrique).

On comprend alors que préférentiellement l'élément de percussion 4 adopte la forme d'un élément configuré de sorte à générer ledit choc de manière ponctuelle sur l'objet 5 que l'on cherche à caractériser et à rebondir du fait dudit choc.

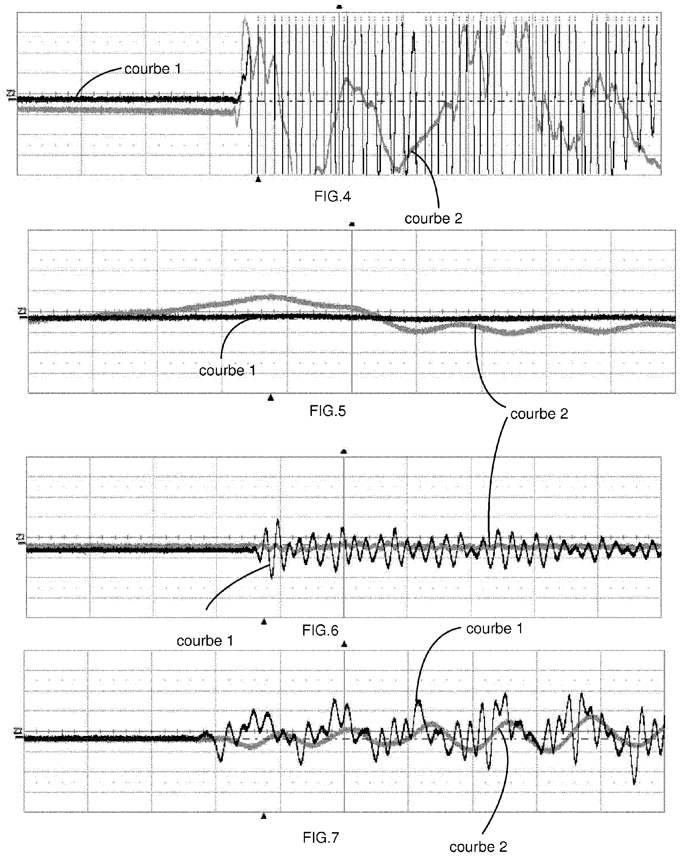

Dans un deuxième temps, après avoir identifié l'élément de percussion 4 le plus adéquat (la bille en acier dans l'exemple), il a été réalisé différents tests qui ont consisté à relever la signature vibratoire d'un choc d'une bille sur une bouteille de 25cl (figure 4), sur une bouteille en plastique (figure 5), sur une pierre (figure 6), sur un morceau de carrelage (figure 7). Sur ces figures 4 à 7, la courbe 1 représente à nouveau la réponse vibratoire enregistrée par le piézoélectrique de type à 40kHz collé sur le flanc de l'objet correspondant et la courbe 2 représente la réponse vibratoire enregistrée par le piézoélectrique de type à 3 kHz collé sur le flanc de l'objet correspondant à une extrémité dudit objet correspondant. Les échelles temporelles et en tension restent les mêmes que pour les figures 2 et 3, c'est-à-dire une division horizontale correspond à 100µs et une division verticale à 2V (tension mesurée directement sur piézoélectrique).

On constate à partir des figures 2 et 4 à 7, que la réponse haute fréquence de la vibration générée par le choc bref et léger d'une bille d'acier, ainsi que le volume sonore et la durée de la vibration, permettent de discriminer facilement le verre des autres matériaux.

Il a résulté du constat ci-dessus qu'il était opportun d'équiper le dispositif de caractérisation 1 d'un élément de percussion 4 adéquat pour générer un choc sur le flanc de la bouteille (zone fortement résonnante contrairement au culot) et d'un microphone, notamment de type piézoélectrique apte à enregistrer des hautes fréquences, pour caractériser l'objet correspondant.

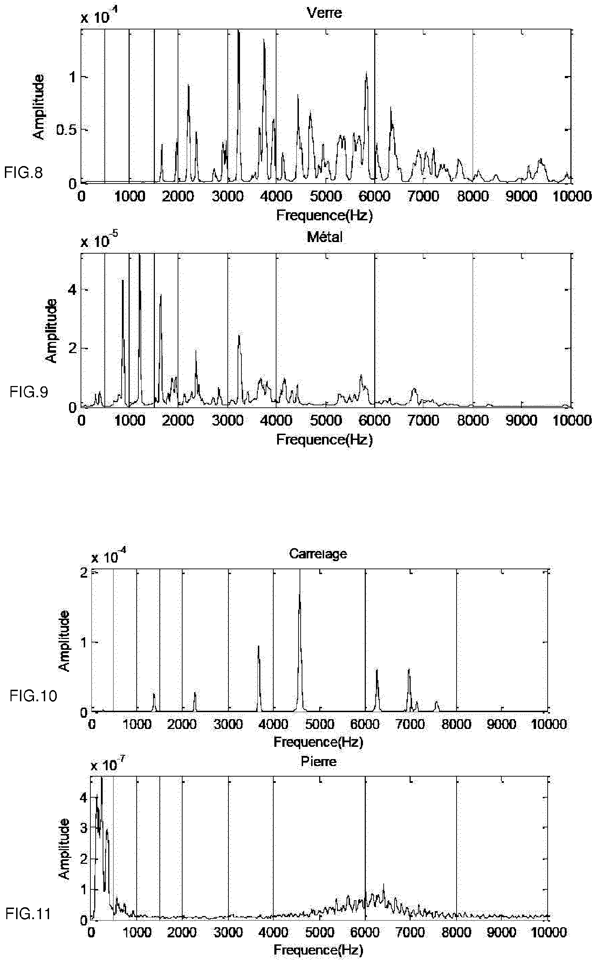

Il a été élaboré tout d'abord dans un cadre expérimental, un système de plan incliné suivi de masselottes de type écrous pendus à un fil élastique. Ce système simule un fonctionnement suivant : guidage latéral en glissade et frappe de masselottes articulées pendant la chute de l'objet (ce système pourra être implanté sur certains containers enterrés, limités en longueur de pénétration axiale). Alternativement, il est aussi possible de mettre en oeuvre un élément de guidage axial gravitaire et de frappe du culot ou du goulot de l'objet sur une languette flexible qui projette par rebond, une masselotte sur le flanc de l'objet. A partir de différents objets glissant latéralement sur le plan incliné pour heurter ensuite les écrous en tombant, il a été possible de générer quatre signaux sonores enregistrés par un micro jack codé sur 16 bits respectivement représentatif d'un objet en verre (bouteille vin 75cl), d'un objet en métal (canette en alu), d'un objet de type carrelage, d'un objet en pierre (galet) dont les transformées de Fourrier sont illustrées respectivement aux figures 8 à 11 par des courbes donnant la puissance du signal sonore en fonction de la fréquence en hertz (le gain du micro et la distance étant figés et identiques pour tous les essais). Dans cette expérience, le cas de la bouteille en plastique n'a pas été retenu car le son est faible et dénué de fréquences aigues et la différentiation avec les autres objets (notamment verre) est implicite (voir figure 5). Sur ces figures 8 à 11, les bandes de fréquence (9 bandes dans l'exemple) sont délimitées verticalement et le spectre est affiché jusqu'à 10kHz. Le gain vertical est dans une échelle linéaire sans unité propre (on cherche juste à ne pas saturer le microphone).

Selon un perfectionnement applicable au dispositif de caractérisation selon toutes ses réalisations et déduit des expérimentations ci dessus, le système acoustique 6 comporte, pour réaliser l'enregistrement dudit signal sonore un microphone analysant les fréquences jusqu'à 16 kHz et dont le codage est sur 24 bits.

En comparant le verre et le métal (figures 8 et 9), il en résulte que les fréquences dominantes du verre sont situées entre 2kHz et 10kHz, alors que celles du métal type canette aluminium sont inférieures à 2kHz. Concernant la pierre (figure 11), les fréquences dominantes sont inférieures à 500Hz et celles du carrelage (figure 10) s'étalent entre 2kHz et 8kHz. Le carrelage se rapproche donc du verre mais son spectre sonore comporte moins de pics et est moins complexe.

On comprend donc qu'avec des filtres adaptés, on peut aisément caractériser un objet, c'est-à-dire savoir si ce dernier est compatible ou non avec le contenant 2 lorsqu'il y sera inséré. L'amplitude de la puissance sonore est aussi discriminante : le verre résonne ainsi avec des fréquences hautes qui sont d'amplitude élevées.

Il en résulte que le module de caractérisation 3 est avantageusement configuré de sorte à exploiter les fréquences dominantes dudit signal sonore et/ou le spectre du signal sonore (et le cas échéant ses amplitudes).

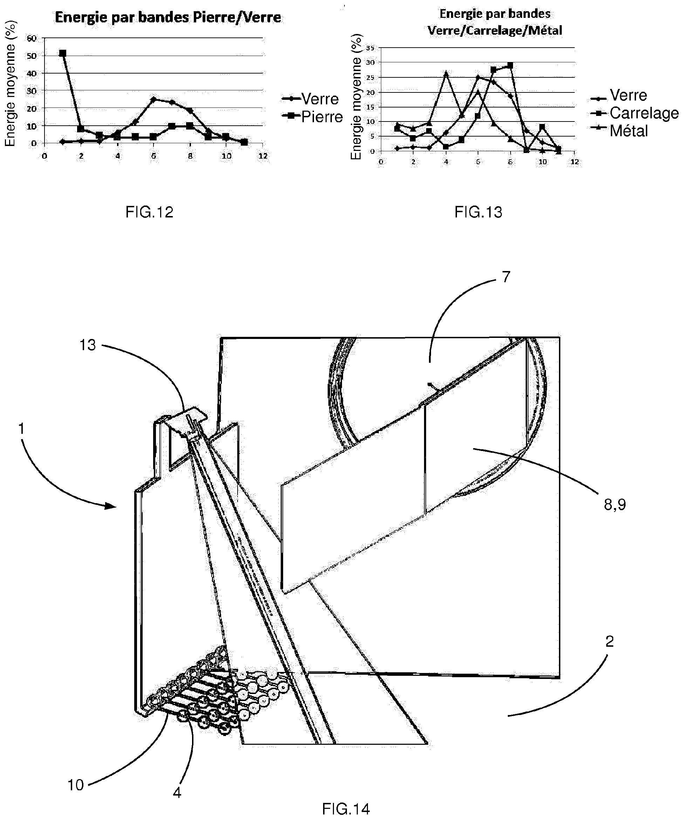

Selon un perfectionnement, le module de caractérisation 3 est aussi, ou alternativement, configuré de sorte à exploiter l'énergie par bandes du signal sonore. Les figures 12 et 13 illustrent respectivement les vecteurs d'énergie moyens calculés pour les différents types de matériaux.

On comprend que via cette ou ces exploitation(s), le module de caractérisation 3 peut fournir en sortie une donnée associée au matériau constituant l'objet 5 que l'on cherche à caractériser.

On comprend donc aussi que la caractérisation d'un objet 5 peut utiliser outre, ou en combinaison avec, ce qui a été dit ci-dessus, le volume du signal sonore, le spectre sonore du signal sonore ou la répartition de l'énergie du spectre sonore dans diverses bandes de fréquence.

Ainsi, de manière générale, les mêmes conclusions que pour l'analyse sur oscilloscope du choc d'une bille d'acier sont tirées :
- la pierre est facilement discriminable par un simple filtre basse-fréquence,
- les métaux peuvent être discriminés en basse fréquence, néanmoins certains échantillons coïncident avec le verre ce qui oblige à explorer les hautes fréquences : notamment si le revêtement intérieur est fin et surtout s'il n'y a pas d'étiquette en papier externe (car ils amortissent les vibrations).
- le carrelage se rapproche fortement du verre mais possède néanmoins une composante basse fréquence plus élevée et un spectre moins riche (quelques pics seulement).

Les bouteilles en plastique n'ont pas de hautes fréquences, ont une réponse sonore faible et sont discriminées sans problème.

Une amélioration possible pour discriminer le métal qui résonne de manière similaire au verre pourra être de rajouter un capteur magnétique (ou autre) sur la zone où glisse l'objet, ce point sera détaillé ci-après.

Bien que les objets décrits soient préférentiellement en verre, les matériaux/objets reconnus pourraient être d'autres types, en particulier de type corps creux aptes à résonner lors d'un choc sur leur flanc. La différentiation sonore (voir magnétique) étendrait la reconnaissance de l'objet à des conserves en fer, des canettes en aluminium, des bouteilles plastiques, voir du papier (feuilles superposées), etc.

En fonction de l'usager introduisant l'objet dans le contenant, la vitesse de l'objet inséré est très diversifiée. Cette vitesse peut avoir un impact sur le choc et sur le traitement du signal sonore résultant au sein du dispositif de caractérisation 1. En ce sens, pour maitriser au mieux la caractérisation, il a été proposé de ralentir volontairement la vitesse de l'objet inséré dans le contenant 2.

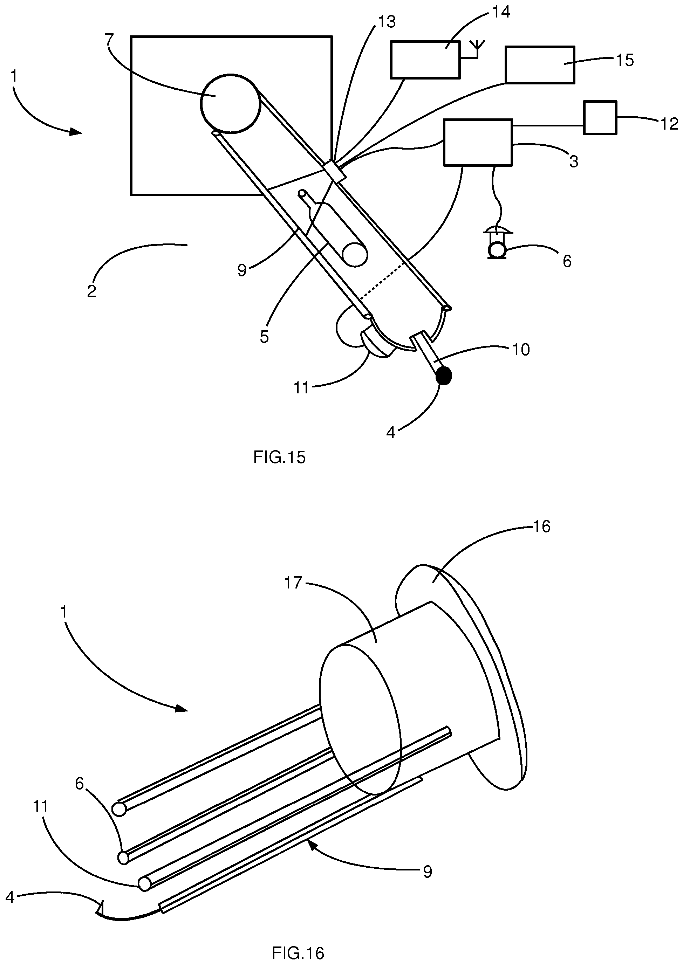

Pour mettre en oeuvre ce ralentissement, le dispositif de caractérisation 1 peut comporter un organe de ralentissement de la chute de l'objet inséré dans le contenant avant son choc avec l'élément de percussion 4. Dans le cadre du dispositif de récupération, cet organe de ralentissement est avantageusement placé dans le contenant à proximité de l'orifice du contenant comme visible aux figures 14 et 15 dans lesquels la caractérisation de l'objet est réalisée pendant une phase de chute de l'objet. Plus particulièrement, cet organe de ralentissement peut être formé par l'élément de guidage 9 décrit ci-avant.

Selon une première réalisation illustrée en figure 14 de l'organe de ralentissement, il est placé dans le contenant 2, sur le chemin de l'objet inséré, un collecteur intermédiaire 8 stoppant la vitesse de l'objet inséré et l'orientant vers l'élément de percussion 4. Il est clair que ce collecteur intermédiaire 8 réalise aussi la fonction de l'élément de guidage 9 décrit ci-avant et peut donc être formé par la même pièce

Selon une deuxième réalisation illustrée en figure 15, l'organe de ralentissement comporte l'élément de guidage 9 réceptionnant ledit objet inséré 5 dans le contenant 2 et guidant ledit objet inséré sur au moins une partie de sa chute dans le contenant, notamment via une pente calibrée. Par exemple, l'élément de guidage 9 adopte la forme d'un tube ou d'une gouttière, ou de tubes parallèles supportant ledit objet sur une partie de sa chute. On comprend alors que l'élément de guidage 9 peut former une glissière contraignant une partie de la chute de l'objet inséré 5 au sein du contenant 2. Le matériau, et l'angle final par rapport à l'horizontale une fois en position finale, de l'élément de guidage seront choisis concomitamment pour assurer un guidage correct de l'objet tout en assurant une caractérisation de l'objet de bonne qualité (c'est-à-dire une frappe latérale sur l'objet au cours de son déplacement). Par angle final et position finale, on entend l'angle et la position dans lesquels l'élément de guidage 9 sera placé au sein du dispositif de caractérisation dans une configuration d'utilisation du dispositif de caractérisation. A titre d'exemple, la glissière formant l'élément de guidage 9 pourra être en polychlorure de vinyle (PVC), un angle final de cette glissière une fois en configuration d'utilisation pouvant être compris entre 30 et 35° par rapport à l'horizontale ; l'élément de guidage 9 peut également être en polyéthylène, l'angle par rapport à l'horizontale en configuration d'utilisation étant alors légèrement supérieur aux valeurs données ci-dessus pour un élément de guidage 9 en PVC. Naturellement, l'élément de guidage peut être en tout autre matériau, par exemple tout autre matériau plastique ou un en un matériau métallique.

Selon un perfectionnement, il est préférable de considérer la résistance aux salissures du dispositif de caractérisation afin que ce dernier ne soit pas bloqué ou dégradé par des coulures sucrées ou lactées. En ce sens, l'utilisation des tubes parallèles décrits ci-dessus serait préférable à un élément à surface uniforme où les coulures stagneraient comme la gouttière.

Selon un perfectionnement visible aux figures 14 et 15 et applicable aux différentes réalisations du dispositif de caractérisation, ledit dispositif de caractérisation 1 comporte un organe flexible 10 sur lequel est monté l'élément de percussion 4. Ce perfectionnement a pour but de favoriser un contact ponctuel entre l'élément de percussion 4 et l'objet 5, permettant ainsi d'obtenir un signal sonore dépourvu de parasites. Sur la figure 14 l'élément flexible 10 comporte une tige et un ressort hélicoïdal. Sur la figure 15 l'élément flexible 10 peut être en carbone, ou en acier, se présentant notamment sous la forme d'une languette. Le couple « poids de la masselotte d'extrémité (élément de percussion) /force de l'effet ressort (élément flexible) » est à adapter avantageusement à la vitesse de passage de la bouteille (ou de l'objet) pour garantir une frappe latérale sur la zone apte à rentrer en résonnance.

Selon une réalisation particulière, l'organe flexible 10 et l'élément de percussion 4 sont agencés de telle sorte qu'au cours de la chute de l'objet 5, par exemple dans le contenant, ledit objet 5 vient en contact avec l'organe flexible 10 qui s'écarte de manière à générer un effet ressort propulsant l'élément de percussion 4 pour provoquer ledit choc entre l'élément de percussion 4 et un flanc dudit objet 5. Selon un perfectionnement, pour obtenir un signal sonore de bonne qualité lorsque l'objet 5 est une bouteille en verre, il est préférable que le choc soit réalisé sur le flanc de la bouteille. En effet, la vibration induite par la bouteille est plus facilement déterminable si le choc a eu lieu sur le flanc. Le flanc de la bouteille correspond à la partie qui relie le culot de la bouteille à son goulot. Généralement, une bouteille est insérée par un usager via son culot dans le contenant 2, ainsi c'est le culot qui vient en contact avec l'organe flexible 10 pour générer l'effet ressort. Selon ce perfectionnement, le couple organe flexible 10/élément de percussion 4 est adapté pour que le retour via l'effet ressort se fasse sur le flanc de la bouteille. Autrement dit, de manière plus générale, l'élément de percussion 4 est avantageusement disposé de telle sorte que ledit choc soit réalisé latéralement sur l'objet 5 vis-à-vis de son déplacement au cours de ladite chute.

Selon une mise en oeuvre, l'organe flexible 10 est monté sur l'élément de guidage 9. Ceci permet de faciliter l'intégration du dispositif de caractérisation au contenant 2 du dispositif de récupération.

Préférentiellement, l'élément de guidage 9 (figure 15) comporte une première extrémité longitudinale proximale d'un l'orifice (notamment l'orifice 7 du contenant) permettant l'insertion dudit objet et la réception dudit objet 5 par l'élément de guidage (9). Au niveau de cet orifice, une pièce externe (appelé par exemple plastron) peut être agencée, par exemple sous la forme d'un composant 16, et éventuellement 17, qui sera décrit ultérieurement en référence avec la figure 16. Cette pièce externe a pour fonction la solidarisation du dispositif au niveau de l'orifice 7 du contenant 2. En outre, l'élément de guidage 9 comporte une deuxième extrémité longitudinale distale dudit orifice, l'organe flexible 10 étant monté à ladite deuxième extrémité longitudinale. On comprend alors que dans ce cas la longueur de l'élément de guidage 9 permet de réduire la vitesse de l'objet inséré 5 avant que ce dernier ne vienne en contact avec l'élément de percussion 4, et, qu'après le choc, l'objet inséré 5 va pouvoir vibrer librement car il sera en chute libre au moins au niveau de la partie qui est frappée (car hors zone de guidage). La pièce externe et l'élément de guidage interne (gouttière, goulotte, tubes, etc.) peuvent former un seul composant ou, selon une variante avantageuse, au moins deux composants distincts. Cette variante présente en effet le premier avantage de permettre une liaison réglable des deux éléments entre eux, permettant notamment de régler l'angle final de l'élément de guidage par rapport à la pièce externe et donc par rapport au contenant. Cela permet une adaptation à la configuration intrinsèque de l'installation et/ou à son positionnement sur une chaussée. Lorsque l'angle final est choisi et positionné, le dispositif peut comprendre un verrou permettant de bloquer l'élément de guidage de manière fiable dans l'orientation souhaitée. D'autre part, cette variante de réalisation présente le second avantage de permettre de fabriquer séparément les deux éléments, et notamment de ne modifier que la dimension de la pièce externe pour l'adapter aux dimensions des contenants existants, tout en conservant le même élément de guidage dans tous les cas. Ainsi, seul le moule de fabrication de la pièce externe est à adapter en fonction du contenant choisi, ce qui optimise le procédé de fabrication. Selon une autre variante, le dispositif peut être formé par plus de deux éléments distincts.

Alternativement à l'organe flexible décrit ci-dessus, il peut être utilisé d'autres systèmes permettant à l'élément de percussion de venir « frapper » le flanc de l'objet. Par exemple, il peut être utilisé un chien de pistolet qui s'arme à l'ouverture d'un opercule autorisant l'introduction de l'objet dans le contenant pour ensuite retomber sur l'objet au moment du passage de ce dernier devant une gâchette. Il pourrait aussi être utilisé un système à bascule.

Selon l'invention, l'élément de percussion 4 est configuré de telle sorte à être mis en mouvement et de telle sorte qu'il résulte de cette mise en mouvement que l'élément de percussion 4 vient frapper l'objet 5 en déplacement. Le mouvement de l'élément de percussion 4 est initié par l'objet 5 lors de son déplacement. Lors de son déplacement, l'objet 5 vient transmettre un effort à l'élément intermédiaire (comme par exemple l'élément flexible 10 décrit ci-avant). Cet élément intermédiaire est agencé avec l'élément de percussion 4 de telle manière que ledit effort appliqué à l'élément intermédiaire provoque la mise en mouvement de l'élément de percussion 4. Ainsi, le mouvement de l'élément de percussion 4 peut être réalisé sans consommation d'énergie électrique en utilisant la transmission de simples efforts mécaniques via l'élément intermédiaire. Autrement dit, la mise en mouvement de l'élément de percussion 4 est préférentiellement uniquement résultante d'efforts mécaniques issus du contact entre l'objet 5 et l'élément intermédiaire.

De préférence, l'élément de percussion 4 n'émet pas de vibration propre (c'est-à-dire que l'élément de percussion 4 est associé à une faible capacité de produire un son de niveau similaire à celui de l'objet comme le ferait un corps creux de type cloche ou même un diapason) afin de faciliter la caractérisation de l'objet 5. Ainsi, il ne perturbe pas l'enregistrement du signal sonore et l'étude du signal sonore enregistré. Si l'élément de percussion 4 venait à posséder une vibration propre, cette dernière serait préférentiellement étalonnée dans le module de caractérisation 3 afin que ce dernier puisse la soustraire au signal enregistré, dans ce cas l'élément de percussion 4 serait choisi de sorte à vibrer sur une fréquence sonnée spécifique. Mais cette vibration propre et surtout son volume sonore pourrait aussi servir à donner une indication de la force du choc et donc de la vitesse de l'objet pour mieux calibrer la reconnaissance si différentes vitesses de passage d'objets étaient à prendre en compte.

Toujours dans l'expectative d'améliorer la caractérisation de l'objet 5, le dispositif de caractérisation 1 peut comporter un capteur magnétique 11 (figure 15) disposé au niveau d'une zone de passage de l'objet 5 au cours de sa chute, par exemple dans le contenant 2, ledit capteur magnétique 11 étant relié au module de caractérisation 3. Ce capteur magnétique 11 peut notamment améliorer la discrimination entre un objet métallique fortement vibrant et le verre. De préférence le capteur magnétique est fixé à l'élément de guidage 9. Ainsi, si le contenant 2 est destiné au stockage d'un objet métallique ou non-métallique, le capteur magnétique 11 pourra participer à la caractérisation de l'objet inséré 5 en envoyant des données au module de caractérisation 3 pour que ce dernier vérifie si l'objet inséré 5 est autorisé ou non au sein du dispositif de récupération.

Sur la figure 15, le système acoustique 6 est représenté par un microphone relié au module de caractérisation 3.

Dans le but d'inciter les usagers à apporter des objets à recycler dans des contenants adaptés, le dispositif de caractérisation 1 peut comporter un module de rétribution 12 (figures 1 et 15) d'un usager en fonction de l'objet inséré, ledit module de rétribution 12 étant relié au module de caractérisation 3. Autrement dit, lorsqu'un usager insère un objet dans le contenant 2, si l'objet inséré 5 est en adéquation avec le contenant 2 (par exemple contenant de stockage de bouteilles en verre), alors l'usager peut être rétribué. Cette rétribution peut être accordée, par le module de rétribution 12, notamment sur un compte adapté de l'usager, en fonction de données issues du module de caractérisation 3.

Le module de rétribution 12 peut comporter un lecteur externe permettant d'identifier l'usager amenant ses objets (bouteilles). Le lecteur externe peut, par exemple, coopérer avec un badge RFID ou un téléphone mobile de l'usager.

Selon un perfectionnement, le dispositif de caractérisation 1 peut comporter un capteur à ultrason 13 (figures 14 et 15). Ce capteur à ultrason 13 est destiné à agir comme un sonar pour réaliser différentes fonctions.

Une première fonction du capteur à ultrason 13 peut être de donner une information supplémentaire permettant de participer à l'identification de l'objet 5. En ce sens, le capteur à ultrason 13 peut être orienté de sorte à couvrir le passage de l'objet 5 au cours de sa chute, et être relié au module de caractérisation 3 pour déterminer au moins une dimension dudit l'objet 5. Ceci permet, par exemple, de déterminer le diamètre de l'objet 5 et de corréler ce diamètre aux tailles usuelles d'objets insérés autorisés dans le contenant 2.

Alternativement ou en combinaison au capteur à ultrason pour déterminer une dimension de l'objet, une roulette peut être montée sur l'élément de guidage de sorte à mesurer la longueur de l'objet. Autrement dit, il est possible qu'une roulette équipée d'aimants passants devant un interrupteur à lames souples, plus connus sous le nom d'interrupteur "Reed", donnant son nombre de tours au passage d'une bouteille, soit rajoutée au système pour obtenir l'indication de la longueur de la bouteille pour une meilleure reconnaissance des types de bouteilles (bocaux, petits pots, mini bouteilles 25cl, vin 75cl, cidre,...).

Selon une variante, l'élément de guidage peut comporter un palpeur, notamment disposé à une extrémité d'arrivée de l'objet dudit système de guidage. Ce palpeur peut alors être configuré de sorte à interagir avec l'objet au cours du déplacement. En outre, l'élément de guidage peut aussi comporter un capteur d'inclinaison du palpeur relié au module de caractérisation de sorte à déterminer la taille de l'objet. Ce palpeur peut être un opercule tel que décrit dans la présente description.

Sur les figures 14 et 15, un cône divergeant s'étend du capteur à ultrason. Ce cône défini le champ de « vision » du capteur à ultrason 13.

Une deuxième fonction du capteur à ultrason 13 peut être de déterminer le taux de remplissage du contenant 2 (dans ce cas le capteur à ultrason peut appartenir au dispositif de récupération). En effet, ceci permet d'anticiper le vidage du contenant 2 avant que ce dernier ne soit plein pour éviter que les usagers stockent les objets à l'extérieur du contenant 2. En ce sens, le capteur à ultrason 13, notamment situé au-dessus d'une sortie du système de guidage, peut être orienté vers le fond du contenant 2, et être relié à un module d'estimation 14 du remplissage du contenant 2 exploitant des mesures issues dudit capteur à ultrason 13. Par exemple, une simple mesure de distance entre un tas d'objets recouvrant le fond du contenant 2 et ledit capteur à ultrason 13 peut être suffisante pour déterminer le taux de remplissage du contenant 2. Le module d'estimation 14 du remplissage peut comporter des moyens de communication permettant de transmettre le taux de remplissage à une société de gestion.

Préférentiellement, un même capteur permet de réaliser les première et deuxième fonctions. Dans ce cas, le capteur à ultrason permet d'une part d'estimer une taille de l'objet au cours de son passage dans une zone de détection dudit capteur à ultrason et, d'autre part, ce capteur est relié au module d'estimation du remplissage 14 du contenant 2 exploitant des mesures issues dudit capteur à ultrason pour déterminer un niveau de remplissage dudit contenant 2 lorsqu'aucun objet n'est présent dans ladite zone de détection.

Une troisième fonction du capteur à ultrason 13 peut être d'éviter la fraude d'un usager qui chercherait à retirer un objet du contenant 2 juste après l'avoir inséré par la technique de « pêche à la ligne » (dans ce cas le capteur à ultrason peut aussi appartenir au dispositif de récupération). Ceci est notamment valable lorsque l'insertion d'objets dans le contenant 2 est valorisée, un usager pourrait alors être tenté de mettre un objet 5 dans le contenant 2 pour qu'il y soit comptabilisé, puis de le retirer avant de le remettre. En ce sens, le capteur à ultrason 13 peut être relié à un module antifraude 15 du dispositif de récupération, ledit module antifraude 15 exploitant des informations en provenance du capteur à ultrason 13 pour détecter une remontée de l'objet inséré 5 dans le contenant 2. Ainsi, les insertions successives d'un même objet peuvent être détectées.

Les trois fonctions du capteur à ultrason 13 peuvent être réalisées indépendamment les unes des autres ou en combinaison. Ces trois fonctions peuvent être réalisées par des capteurs à ultrason distincts, et préférentiellement pour des raisons de coûts par un unique capteur à ultrason orienté de manière idoine dans le contenant 2.

Une autre façon de mettre en oeuvre ces fonctionnalités est d'équiper un opercule anti-odeur d'entrée du contenant d'un gyroscope et d'un interrupteur magnétique type Reed. Dès que l'opercule bouge, l'interrupteur type Reed lance le gyroscope, ou tout autre capteur d'inclinaison, qui va mesurer la levée de l'opercule. Cela donne une indication du diamètre de la bouteille. Ensuite, quand la bouteille atteint la languette carbone, un autre interrupteur ILS situé à la base de la languette donne un top de chronométrage entre le moment du choc de la masselotte sur le flanc de la bouteille et le temps qu'elle met à atteindre le fond du contenant. La fonctionnalité anti pêche à la ligne peut aussi se faire par la détection de la manipulation de l'opercule pendant une durée importante (c'est-à-dire s'il est maintenu levé à la main).

On comprend de tout ce qui a été dit ci-dessus que l'invention est aussi relative à un procédé de caractérisation d'objets, notamment de déchets, à l'aide d'un dispositif de caractérisation tel que décrit. En ce sens, le procédé peut comporter une étape d'étude du signal sonore par le système acoustique 6.

En particulier, il résulte de ce qui a été dit précédemment que l'étape d'étude du signal sonore peut comporter une étape d'extraction des fréquences dominantes dudit signal sonore et/ou du spectre sonore dudit signal sonore et/ou de l'énergie par bande dudit signal sonore, et une étape de discrimination du matériau constituant l'objet à partir de données issus de l'étape d'extraction (ces données pouvant être associées aux fréquences dominantes dudit signal sonore et/ou au spectre sonore dudit signal sonore et/ou à l'énergie par bande dudit signal sonore).

En fonction du résultat de l'étape de discrimination, le procédé peut comporter une étape de rétribution d'un usager en particulier.

La formation d'un dispositif de récupération tel que décrit peut être réalisée par fabrication de l'ensemble en usine ou par instrumentalisation de contenants déjà existants avec des dispositifs de caractérisation tels que décrits.

Selon un mode de réalisation particulier illustré en figure 16, l'instrumentation d'un contenant déjà existant peut être facilement réalisée sans modification, ou sans modification importante du contenant. Dans ce cas, le dispositif de caractérisation 1 peut comporter une couronne extérieure 16, notamment destinée à venir se plaquer sur une partie de la face extérieure du contenant au niveau d'un orifice du contenant. La couronne est fixée à un manchon 17 creux coopérant avec l'orifice du contenant pour assurer un maintien idoine dudit dispositif de caractérisation 1 par rapport au contenant et le passage de l'objet via l'intérieur du manchon 17, ensuite l'élément de guidage 9 s'étend à partir du manchon 17 en direction du fond du contenant 2. Dans l'exemple illustré, l'élément de guidage 9 est formé par des tubes parallèles (quatre dans l'exemple représenté, mais un nombre plus important pourra être prévu) agencés de telle sorte à maintenir ledit objet au cours de son guidage pendant sa chute. L'élément de percussion 4 est assemblé à l'extrémité libre d'un desdits tubes.

A titre de variante, plusieurs éléments de percussion pourront être prévus à l'extrémité libre de différents tubes. Les éléments de percussion pourront alors avoir des poids distincts, pour améliorer la discrimination des objets (notamment en fonction de leur taille). Un clapet peut être monté sur la couronne extérieure 16 de sorte à agir comme clapet anti-odeur et/ou participer comme évoqué précédemment à une mesure d'une dimension de l'objet.

De manière applicable à tout ce qui a été dit ci-avant, dans le cadre de l'utilisation d'un élément de guidage 9 à base de tubes parallèles, ces tubes sont préférentiellement creux de sorte à permettre le passage de connexion électriques par exemple du microphone 6 et/ou du capteur magnétique 11 et/ou un interrupteur de détection de la percussion de l'objet, par exemple pour le déclenchement du dispositif d'acquisition acoustique. Ceux-ci seront montés aux extrémités libres de tubes correspondants. Comme décrit précédemment, l'élément de guidage 9 peut avoir une forme générale de gouttière.

Selon un développement, le signal sonore enregistré peut être utilisé par le module de caractérisation 3 pour réaliser une étude du temps de propagation de la vibration issue du choc dans l'objet, notamment lorsque l'objet est en verre, pour le différencier d'objets en autres matériaux. Ceci peut être utile dans le cas où les résultats du module de caractérisation 3 sont utilisés dans le cadre du tri d'objets.

## Revendications

1. Dispositif de caractérisation (1) d'un objet (5) en déplacement, comprenant :
- un module de caractérisation (3) dudit objet (5),
- un élément de guidage (9) de l'objet (5) configuré de sorte à contraindre au moins une partie du déplacement de l'objet (5),
- un élément de percussion (4) disposé de sorte à générer un choc sur l'objet (5) au cours de son déplacement après que ledit objet a coopéré avec au moins une partie de l'élément de guidage (9), cet élément de percussion (4) étant configuré de telle sorte à être mis en mouvement et de telle sorte qu'il résulte de cette mise en mouvement que l'élément de percussion (4) vient frapper l'objet (5) en déplacement,
- un système acoustique (6) configuré de sorte à enregistrer un signal sonore représentatif dudit choc entre l'élément de percussion (4) et l'objet (5), ledit système acoustique (6) étant relié audit module de caractérisation (3) afin que le signal sonore enregistré participe à la caractérisation dudit objet (5),
ledit dispositif étant **caractérisé en ce qu'**il comprend un élément intermédiaire (10) agencé avec l'élément de percussion (4), le mouvement de l'élément de percussion (4) étant initié par l'objet (5) lors de son déplacement venant transmettre un effort à l'élément intermédiaire (10) de telle manière que ledit effort appliqué à l'élément intermédiaire (10) provoque la mise en mouvement de l'élément de percussion (4).

2. Dispositif selon la revendication précédente, **caractérisé en ce que** ledit déplacement correspond à une chute dudit objet (5).

3. Dispositif selon l'une des revendications précédentes, **caractérisé en ce que** l'élément de percussion (4) est disposé de telle sorte que ledit choc soit réalisé latéralement sur l'objet (5) vis-à-vis de son déplacement.

4. Dispositif selon l'une des revendications précédentes, **caractérisé en ce que** l'élément de percussion (4) est disposé le long de l'élément de guidage (9) ou à une extrémité de l'élément de guidage (9) et/ou **en ce que** l'élément de percussion (4) est mobile relativement à l'élément de guidage (9) pour venir percuter un objet (5) au niveau de l'élément de guidage (9).

5. Dispositif selon l'une des revendications précédentes, **caractérisé en ce qu'**il comporte un capteur à ultrason (13) orienté de sorte à couvrir le passage de l'objet (5) au cours de son déplacement, ledit capteur à ultrason étant relié au module de caractérisation (3) pour déterminer au moins une dimension dudit objet (5).

6. Dispositif selon l'une quelconque des revendications précédentes, **caractérisé en ce que** l'élément de guidage (9) adopte la forme d'un tube ou d'une gouttière ou de tubes parallèles.

7. Dispositif selon l'une quelconque des revendications précédentes, **caractérisé en ce qu'**il comporte un organe flexible (10) sur lequel est monté l'élément de percussion (4).

8. Dispositif selon la revendication précédente, **caractérisé en ce que** ledit organe flexible (10) et l'élément de percussion (4) sont agencés de telle sorte qu'au cours du déplacement de l'objet (5), ledit objet (5) vient en contact avec l'organe flexible (10) qui s'écarte de manière à générer un effet ressort propulsant l'élément de percussion (4) pour provoquer ledit choc entre l'élément de percussion (4) et un flanc de l'objet (5).

9. Dispositif selon la revendication précédente, **caractérisé en ce que** l'élément de guidage (9) comporte une première extrémité longitudinale proximale d'un orifice (7) permettant l'insertion dudit objet (5) et la réception dudit objet (5) par l'élément de guidage (9), et une deuxième extrémité longitudinale distale dudit orifice (7), l'organe flexible (10) étant monté à ladite deuxième extrémité longitudinale.

10. Dispositif selon l'une quelconque des revendications précédentes, **caractérisé en ce que** le module de caractérisation (3) est configuré de sorte à exploiter les fréquences dominantes dudit signal sonore et/ou le spectre du signal sonore et/ou l'énergie par bandes du signal sonore.

11. Dispositif de récupération d'objets comprenant un contenant (2) dans lequel lesdits objets sont destinés à être insérés et un dispositif de caractérisation d'objet selon l'une quelconque des revendications précédentes disposé de telle sorte à caractériser ledit objet au cours de son insertion dans ledit contenant (2).

12. Dispositif selon la revendication précédente, **caractérisé en ce qu'**un premier capteur à ultrason, notamment situé au-dessus d'une sortie du système de guidage, est orienté vers le fond du contenant (2), ledit premier capteur à ultrason permettant d'une part d'estimer une taille de l'objet au cours de son passage dans une zone de détection du premier capteur à ultrason et, d'autre part, ledit premier capteur à ultrason est relié à un module d'estimation du remplissage (14) du contenant (2) exploitant des mesures issues dudit premier capteur à ultrason pour déterminer un niveau de remplissage dudit contenant (2) lorsqu'aucun objet n'est présent dans ladite zone de détection.

13. Dispositif selon l'une des revendications 11 ou 12, **caractérisé en ce qu'**un deuxième capteur à ultrason est relié à un module antifraude (15) du dispositif de récupération (1), ledit module antifraude (15) exploitant des informations en provenance dudit deuxième capteur à ultrason (13) pour détecter une remontée de l'objet inséré (5) dans le contenant (2).

14. Procédé de caractérisation d'objets à l'aide d'un dispositif selon l'une des revendications 1 à 10, **caractérisé en ce qu'**il comporte une étape d'étude du signal sonore par le système acoustique (6).

15. Procédé selon la revendication précédente, **caractérisé en ce que** l'étape d'étude du signal sonore comporte une étape d'extraction des fréquences dominantes dudit signal sonore et/ou du spectre sonore dudit signal sonore et/ou de l'énergie par bande dudit signal sonore, et une étape de discrimination du matériau constituant l'objet (5) à partir de données issus de l'étape d'extraction.

## Patentansprüche

1. Vorrichtung zur Charakterisierung (1) eines sich bewegenden Objekts (5), welche umfasst:
- ein Modul zur Charakterisierung (3) des Objekts (5),
- ein Element zur Führung (9) des Objekts (5), das so gestaltet ist, dass es wenigstens einen Teil der Bewegung des Objekts (5) einschränkt,
- ein Schlagelement (4), das so angeordnet ist, dass es einen Stoß gegen das Objekt (5) während dessen Bewegung erzeugt, nachdem das Objekt mit wenigstens einem Teil des Führungselements (9) zusammengewirkt hat, wobei dieses Schlagelement (4) derart gestaltet ist, dass es in Gang gesetzt wird, und derart, dass aus dieser Ingangsetzung resultiert, dass das Schlagelement (4) an das sich bewegende Objekt (5) anschlägt,
- ein akustisches System (6), das so gestaltet ist, dass es ein Tonsignal aufzeichnet, das für den Zusammenstoß zwischen dem Schlagelement (4) und dem Objekt (5) repräsentativ ist, wobei das akustische System (6) mit dem Charakterisierungsmodul (3) verbunden ist, damit das aufgezeichnete Tonsignal an der Charakterisierung des Objekts (5) teilnimmt,
wobei die Vorrichtung **dadurch gekennzeichnet ist, dass** sie ein Zwischenelement (10) umfasst, das mit dem Schlagelement (4) angeordnet ist, wobei die Bewegung des Schlagelements (4) durch das Objekt (5) bei dessen Bewegung eingeleitet wird, die eine Kraft auf das Zwischenelement (10) überträgt, derart, dass die auf das Zwischenelement (10) ausgeübte Kraft die Ingangsetzung des Schlagelements (4) hervorruft.

2. Vorrichtung nach dem vorhergehenden Anspruch, **dadurch gekennzeichnet, dass** die Bewegung einem Fall des Objekts (5) entspricht.

3. Vorrichtung nach einem der vorhergehenden Ansprüche, **dadurch gekennzeichnet, dass** das Schlagelement (4) derart angeordnet ist, dass der Stoß seitlich gegen das Objekt (5) ausgeführt wird, bezogen auf dessen Bewegung.

4. Vorrichtung nach einem der vorhergehenden Ansprüche, **dadurch gekennzeichnet, dass** das Schlagelement (4) entlang des Führungselements (9) oder an einem Ende des Führungselements (9) angeordnet ist, und/oder dadurch, dass das Schlagelement (4) bezüglich des Führungselements (9) beweglich ist, um auf ein Objekt (5) im Bereich des Führungselements (9) aufzuprallen.

5. Vorrichtung nach einem der vorhergehenden Ansprüche, **dadurch gekennzeichnet, dass** es einen Ultraschallsensor (13) aufweist, der derart ausgerichtet ist, dass er den Durchgang des Objekts (5) während dessen Bewegung abdeckt, wobei der Ultraschallsensor mit dem Charakterisierungsmodul (3) verbunden ist, um wenigstens eine Abmessung des Objekts (5) zu bestimmen.

6. Vorrichtung nach einem der vorhergehenden Ansprüche, **dadurch gekennzeichnet, dass** das Führungselement (9) die Form eines Rohres oder einer Rinne oder von parallelen Rohren aufweist.

7. Vorrichtung nach einem der vorhergehenden Ansprüche, **dadurch gekennzeichnet, dass** sie ein flexibles Organ (10) aufweist, an welchem das Schlagelement (4) angebracht ist.

8. Vorrichtung nach dem vorhergehenden Anspruch, **dadurch gekennzeichnet, dass** das flexible Organ (10) und das Schlagelement (4) derart angeordnet sind, dass während der Bewegung des Objekts (5) das Objekt (5) in Kontakt mit dem flexiblen Organ (10) kommt, welches sich entfernt, derart, dass es eine Federwirkung erzeugt, die das Schlagelement (4) antreibt, um den Zusammenstoß zwischen dem Schlagelement (4) und einer Seite des Objekts (5) hervorzurufen.

9. Vorrichtung nach dem vorhergehenden Anspruch, **dadurch gekennzeichnet, dass** das Führungselement (9) ein erstes Längsende in der Nähe einer Öffnung (7), die das Einführen des Objekts (5) und die Aufnahme des Objekts (5) durch das Führungselement (9) ermöglicht, und ein von der Öffnung (7) entferntes zweites Längsende aufweist, wobei das flexible Organ (10) an dem zweiten Längsende angebracht ist.

10. Vorrichtung nach einem der vorhergehenden Ansprüche, **dadurch gekennzeichnet, dass** das Charakterisierungsmodul (3) derart gestaltet ist, dass es die dominanten Frequenzen des Tonsignals und/oder das Spektrum des Tonsignals und/oder die Energie der Frequenzbänder des Tonsignals auswertet.

11. Vorrichtung zur Rücknahme von Objekten, welche einen Behälter (2) umfasst, in welchen die Objekte eingeführt werden sollen, und eine Vorrichtung zur Charakterisierung eines Objekts nach einem der vorhergehenden Ansprüche, die derart angeordnet ist, dass sie das Objekt während seiner Einführung in den Behälter (2) charakterisiert.

12. Vorrichtung nach dem vorhergehenden Anspruch, **dadurch gekennzeichnet, dass** ein erster Ultraschallsensor, der sich insbesondere über einem Ausgang des Führungssystems befindet, zum Boden des Behälters (2) hin ausgerichtet ist, wobei der erste Ultraschallsensor einerseits ermöglicht, eine Größe des Objekts während seiner Vorbeibewegung in einem Detektionsbereich des ersten Ultraschallsensors zu schätzen, und andererseits der erste Ultraschallsensor mit einem Modul zur Schätzung der Füllung (14) des Behälters (2) verbunden ist, welches von dem ersten Ultraschallsensor stammende Messwerte auswertet, um eine Füllhöhe des Behälters (2) zu bestimmen, wenn kein Objekt in dem Detektionsbereich vorhanden ist.

13. Vorrichtung nach einem der Ansprüche 11 oder 12, **dadurch gekennzeichnet, dass** ein zweiter Ultraschallsensor mit einem Modul zum Betrugsschutz (15) der Rücknahmevorrichtung (1) verbunden ist, wobei das Modul zum Betrugsschutz (15) von dem zweiten Ultraschallsensor (13) stammende Informationen auswertet, um eine Aufwärtsbewegung des in den Behälter (2) eingeführten Objekts (5) zu erkennen.

14. Verfahren zur Charakterisierung von Objekten mithilfe einer Vorrichtung nach einem der Ansprüche 1 bis 10, **dadurch gekennzeichnet, dass** es einen Schritt der Untersuchung des Tonsignals durch das akustische System (6) umfasst.

15. Verfahren nach dem vorhergehenden Anspruch, **dadurch gekennzeichnet, dass** der Schritt der Untersuchung des Tonsignals einen Schritt der Extraktion der dominanten Frequenzen des Tonsignals und/oder des Frequenzspektrums des Tonsignals und/oder der Energie der Frequenzbänder des Tonsignals und einen Schritt der Unterscheidung des Materials, aus dem das Objekt (5) besteht, anhand von aus dem Schritt der Extraktion stammenden Daten umfasst.

## Claims

1. Device (1) for characterizing a moving object (5), comprising:
- a module (3) for characterizing said object (5);
- an element (9) for guiding the object (5) configured so as to restrict at least part of the movement of the object (5);
- a percussion element (4) disposed so as to generate an impact on the object (5) during its movement, after said object has engaged with at least part of the guiding element (9), said percussion element (4) being configured so as to be moved and so that the result of this movement is that the percussion element (4) strikes the moving object (5);
- an acoustic system (6) configured so as to store an audible signal representing said impact between the percussion element (4) and the object (5), said acoustic system (6) being connected to said characterizing module (3) so that the stored audible signal is used in the characterization of said object (5), said device being **characterized in that** it comprises an intermediate element (10) arranged with the percussion element (4), the movement of the percussion element (4) being initiated by the object (5) during its movement causing the transmission of a force to the intermediate element (10) in such a way that said force applied to the intermediate element (10) causes the percussion element (4) to move.

2. Device according to the preceding claim, **characterized in that** said displacement corresponds to a fall of said object (5).

3. Device according to any of the preceding claims, **characterized in that** the percussion element (4) is disposed so that said impact occurs laterally on the object (5) with respect to its movement.

4. Device according to any of the preceding claims, **characterized in that** the percussion element (4) is disposed along the guiding element (9) or at an end of the guiding element (9) and/or **in that** the percussion element (4) is movable relative to the guiding element (9) in order to strike an object (5) in the vicinity of the guiding element (9) .

5. Device according to any of the preceding claims, **characterized in that** it comprises an ultrasound sensor (13) oriented so as to cover the passage of the object (5) during its movement, said ultrasound sensor being connected to the characterizing module (3) to determine at least one dimension of said object (5).

6. Device according to any of the preceding claims, **characterized in that** the guiding element (9) adopts the form of a tube or a trough or of parallel tubes.

7. Device according to any of the preceding claims, **characterized in that** it comprises a flexible component (10), on which the percussion element (4) is mounted.

8. Device according to the preceding claim, **characterized in that** said flexible component (10) and the percussion element (4) are arranged so that, during the movement of the object (5), said object (5) makes contact with the flexible component (10), which separates so as to generate a spring force propelling the percussion element (4) in order to generate said impact between the percussion element (4) and a side of the object (5).

9. Device according to the preceding claim, **characterized in that** the guiding element (9) comprises a first proximal longitudinal end of an orifice (7) allowing the insertion of said object (5) and the reception of said object (5) by the guiding element (9), and a second distal longitudinal end of said orifice (7), the flexible component (10) being mounted at said second longitudinal end.

10. Device according to any of the preceding claims, **characterized in that** the characterizing module (3) is configured so as to use the dominant frequencies of said audible signal and/or the spectrum of the audible signal and/or the band energy of the audible signal.

11. Device for recovering objects comprising a container (2), into which said objects are intended to be inserted, and a device for characterizing an object according to any of the preceding claims that is disposed so as to characterize said object during its insertion into said container (2).

12. Device according to the preceding claim, **characterized in that** a first ultrasound sensor, particularly located above an output of the guiding system, is oriented towards the bottom of the container (2), said first ultrasound sensor allowing, on the one hand, estimation of a size of the object during its passage through a detection zone of the first ultrasound sensor and, on the other hand, said first ultrasound sensor is connected to a module (14) for estimating the filling of the container (2) using measurements originating from said first ultrasound sensor to determine a filling level of said container (2) when no object is present in said detection zone.

13. Device according to any of Claims 11 or 12, **characterized in that** a second ultrasound sensor is connected to an anti-fraud module (15) of the recovery device (1), said anti-fraud module (15) using information originating from said second ultrasound sensor (13) to detect any lifting of the object (5) inserted into the container (2) .

14. Method for characterizing objects using a device according to any of Claims 1 to 10, **characterized in that** it comprises a step of studying the audible signal using the acoustic system (6).

15. Method according to the preceding claim, **characterized in that** the step of studying the audible signal comprises a step of extracting dominant frequencies from said audible signal and/or from the audible spectrum of said audible signal and/or from the band energy of said audible signal, and a step of differentiating the material forming the object (5) on the basis of data originating from the extraction step.
